# EUROPÄISCHE PATENTANMELDUNG

(11) **EP 1 103 440 A1**
(43) Veröffentlichungstag der Anmeldung: **30.05.2001**
(21) Anmeldenummer: 00124488.8
(22) Anmeldetag: 09.11.2000
(51) Int. Cl.: B61D 17/04

(54) **Wagenkasten eines Schienenfahrzeuges zur Personenbeförderung**

(30) Priorität: 18.11.1999 DE 19955539
(71) Anmelder: Siemens Duewag Schienenfahrzeuge GmbH, 47829 Krefeld (DE)
(72) Erfinder: Calomfirescu, Mikail, Dipl.-Ing., 45359 Essen (DE); Meyer, Gerd, Dr.-Ing., 51375 Leverkusen (DE); Treutler, Helmut, Dipl.-Ing., 47798 Krefeld (DE); Himmelbauer, Roland, Dipl.-Ing., 3400 Klosterneuburg (AT)

(57) **Zusammenfassung**

Ein Wagenkasten eines Schienenfahrzeuges zur Personenbeförderung hat ein Untergestell (1), Türöffnungen (2a) enthaltende Seitenwände (2), ein Dach (3) und Stirnwände (4). Zwischen dem Untergestell (1) und dem Dach (3) ist eine in der Längsmitte des Wagenkastens liegende vertikale Mittelwand (5) als tragendes Element angeordnet.

## Beschreibung

Die Erfindung betrifft einen Wagenkasten eines Schienenfahrzeuges zur Personenbeförderung mit einem Untergestell, Türöffnungen enthaltenden Seitenwänden, einem Dach und Stirnwänden.

Es ist allgemein bekannt, den Wagenkasten eines Schienenfahrzeuges in Stahl-Differential-Bauweise oder in Aluminium-Integral-Bauweise auszuführen. Bei diesen Bauweisen ist die tragende Struktur des Wagenkastens in der Regel aus dem Untergestell, den Seitenwänden, dem Dach sowie den Stirnwänden/Portalen gebildet.

Der Erfindung liegt die Aufgabe zugrunde, einen Wagenkasten der gattungsgemäßen Art so auszubilden, daß die Seitenwände im Hinblick auf eine flexible Gestaltung bezüglich der Anordnung von Türöffnungen und ggf. auch Fenstern keine tragende Funktion ausüben.

Diese Aufgabe wird erfindungsgemäß dadurch gelöst, daß zwischen dem Untergestell und dem Dach eine in der Längsmitte des Wagenkastens liegende vertikale Mittelwand als tragendes Element angeordnet ist.

Die vertikale Mittelwand überträgt alle auftretenden Lasten zwischen Untergestell und Dach. In diese Kraftübertragung sind die Seitenwände nicht einbezogen, so daß sie - völlig frei von statischen Zwängen bekannter Bauweisen - je nach Einsatzgebiet des Schienenfahrzeuges mit unterschiedlichen Türanordnungen und Fensterteilern ausgeführt werden können. Bei einem Einsatz des Schienenfahrzeuges als Massentransportmittel (Metro) kann die Anzahl der Türöffnungen im Sinne eines raschen Fahrgastwechsels maximiert werden.

Vorteilhafte Ausgestaltungen der Erfindung sind in den Unteransprüchen angegeben.

Im weiteren wird die Erfindung anhand von zwei Ausführungsbeispielen näher beschrieben, die in der Zeichnung prinzipartig dargestellt ist. Es zeigen
- Fig. 1: einen Wagenkasten eines Schienenfahrzeuges in perspektivischer Ansicht,
- Fig. 2: den Wagenkasten nach Fig. 1 in der Draufsicht,
- Fig. 3: einen gegenüber Fig. 1 und 2 alternativ ausgebildeten Wagenkasten, ebenfalls in der Draufsicht.

Das Untergestell 1 des Wagenkastens weist einen mittleren Langträger 1a auf, der als Kastenträger oder als Doppel-T-Träger ausgeführt sein kann. Dieser mittlere Langträger 1a ist mit Querträgern 1b verbunden, die oberhalb hier nicht gezeigter Laufwerke als Hauptquerträger gestaltet sind. Das Dach hat ebenfalls einen bevorzugt als Kastenträger oder Doppel-T-Träger ausgebildeten mittleren Langträger 3a, an dem Dachspanten 3b angeschlossen sind. Der mittlere Langträger 1a des Untergestelles 1 und der mittlere Langträger 3a des Daches 3 können für eine Aufnahme von Aggregaten (elektrisch, pneumatisch, hydraulisch, Klimakanäle) entsprechend ausgeführt sein. Die portalartig ausgebildeten Stirnwände 4 des Wagenkastens ermöglichen den Fahrgästen einen Durchgang zu benachbarten Wagen.

In Längsmitte des Wagenkastens ist eine vertikale Mittelwand 5 angeordnet, die mit dem mittleren Langträger 1a des Untergestelles 1 und mit dem mittleren Langträger 3a des Daches 3 kraftübertragend verbunden ist. Durch diese tragende Mittelwand 5 werden beispielsweise über Mittelpufferkupplungen in den mittleren Langträger 1a des Untergestelles 1 eingeleitete Kräfte in das Dach 3 übertragen, wobei auch die Stirnwände 4 mitwirken. Die äußeren Seitenwände 2 des Wagenkasten sind jedoch in die Kraftübertragung zwischen Untergestell 1 und Dach 3 nicht einbezogen. Dadurch können die Seitenwände 2 jeweils eine Öffnung aufweisen, die sich soweit wie möglich in Länge des Wagenkastens erstreckt.

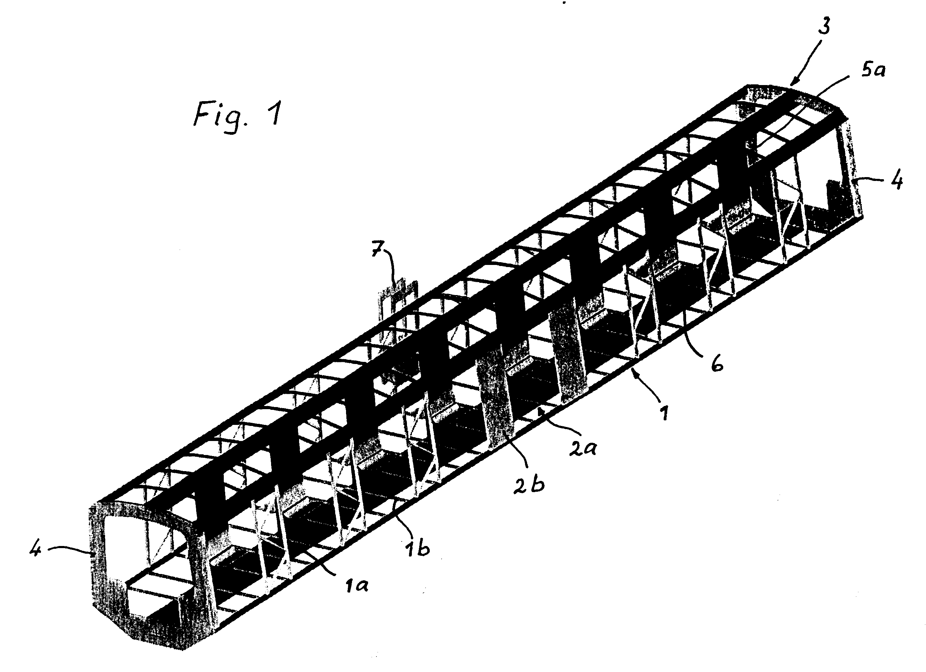

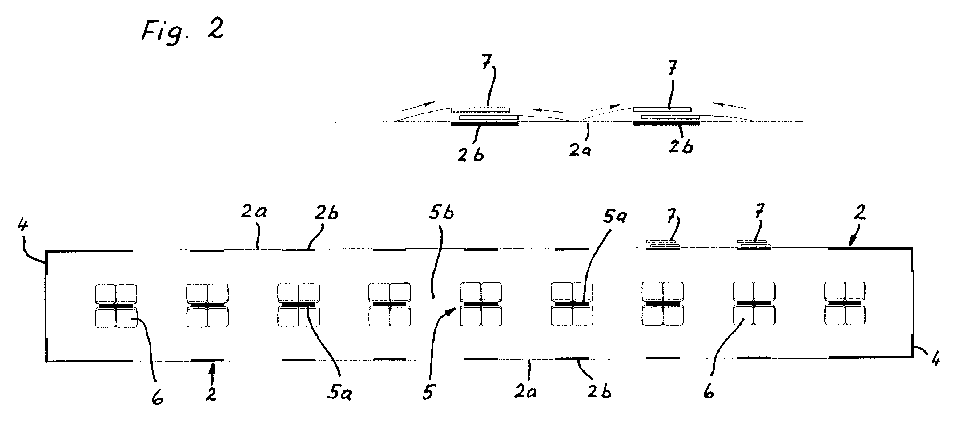

Wie aus den Fig. 1 und 2 ersichtlich ist, besteht die vertikale Mittelwand 5 aus einzelnen Wandelementen 5a. Diese Wandelemente 5a sind in einem Abstand zueinander angeordnet, der einen Durchgang 5b für die Fahrgäste bietet. Die in die Inneneinrichtung des Fahrzeuges integrierten Wandelemente 5a dienen jeweils der Befestigung von Fahrgastsitzen 6, die in Wagenlängsrichtung angeordnet sind.

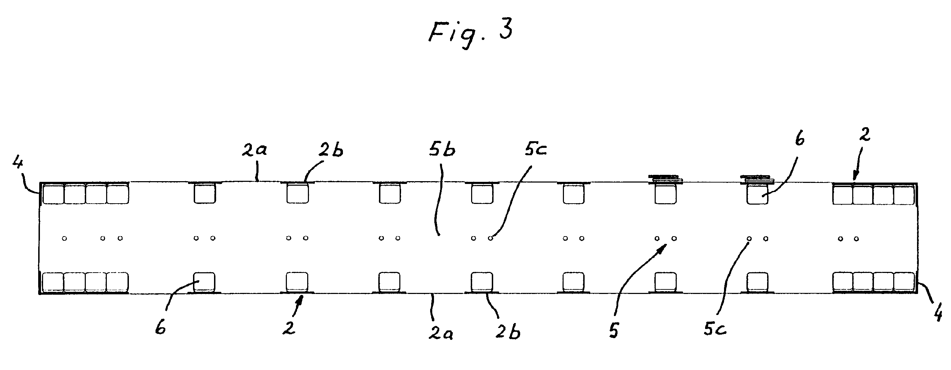

Im Ausführungsbeispiel nach Fig. 3 besteht die vertikale Mittelwand 5 aus einzelnen Säulen 5c. Auch in diesem Fall ist ein Durchgang 5b für die Fahrgäste vorhanden. Die mittleren Säulen 5c sind vorzugsweise als Griffstangen für die Fahrgäste ausgebildet. Die Fahrgastsitze 6 befinden sich an den äußeren Seitenwänden 2 des Wagenkastens.

Die äußeren Seitenwände 2 des Wagenkastens bestehen aus einander abwechselnden Seitenwandfeldern 2b und breiten Türöffnungen 2a, die mit seitlich bewegbaren Türflügeln 7 verschließbar sind. Wegen der besonders schmalen Seitenwandfelder 2b und der erheblichen Breite der Türöffnungen 2a ist eine Anordnung vorgesehen, bei der sich die Türflügel 7 benachbarter Türöffnungen 2a in ihrer geöffneten Stellung einander weitgehend überdecken - siehe dazu speziell die zu Fig. 2 gehörende vergrößerte Darstellung. Die Seitenwandfelder 2b können mit Fenstern versehen oder fensterlos sein, wobei lediglich die Türflügel 7 Fenster beinhalten. Es empfiehlt sich, die Seitenwandfelder 2b aus faserverstärktem Kunststoff herzustellen und an ihrem oberen Rand sowie an ihrem unteren Rand im Sinne einer Aufnahme von Längsschub auszubilden.

### Liste der Bezugszeichen

- 1: Untergestell
- 1a: mittlerer Langträger
- 1b: Querträger
- 2: äußere Seitenwand
- 2a: Türöffnung
- 2b: Seitenwandfeld
- 3: Dach
- 3a: mittlerer Langträger
- 3b: Dachspanten
- 4: Stirnwand bzw. Portal
- 5: vertikale Mittelwand
- 5a: einzelnes Wandelement
- 5b: Durchgang für Fahrgäste
- 5c: einzelne Säule
- 6: Fahrgastsitz
- 7: Türflügel

## Patentansprüche

1. Wagenkasten eines Schienenfahrzeuges zur Personenbeförderung mit einem Untergestell (1), Türöffnungen (2a) enthaltenden Seitenwänden (2), einem Dach (3) und Stirnwänden (4), dadurch gekennzeichnet, daß zwischen dem Untergestell (1) und dem Dach (3) eine in der Längsmitte des Wagenkastens liegende vertikale Mittelwand (5) als tragendes Element angeordnet ist.

2. Wagenkasten nach Anspruch 1, dadurch gekennzeichnet, daß die vertikale Mittelwand (5) mit einem mittleren Langträger (1a) des Untergestelles (1) und mit einem mittleren Langträger (3a) des Daches (3) verbunden ist.

3. Wagenkasten nach Anspruch 2, dadurch gekennzeichnet, daß der mittlere Langträger (1a) des Untergestelles (1) und/oder der mittlere Langträger (3a) des Daches (3) als Kastenträger oder als Doppel-T-Träger ausgeführt ist.

4. Wagenkasten nach einem der Ansprüche 1 bis 3, dadurch gekennzeichnet, daß die vertikale Mittelwand (5) aus einzelnen Wandelementen (5a) besteht.

5. Wagenkasten nach Anspruch 4, dadurch gekennzeichnet, daß die einzelnen Wandelemente (5a) der vertikalen Mittelwand (5) in einem Abstand zueinander angeordnet sind, der einen Durchgang (5b) für Fahrgäste ermöglicht.

6. Wagenkasten nach Anspruch 4 oder 5, dadurch gekennzeichnet, daß die Wandelemente (5a) jeweils der Befestigung von Fahrgastsitzen (6) dienen, die in Wagenlängsrichtung angeordnet sind.

7. Wagenkasten nach einem der Ansprüche 1 bis 3, dadurch gekennzeichnet, daß die vertikale Mittelwand (5) nur aus einzelnen Säulen (5c) besteht.

8. Wagenkasten nach Anspruch 7, dadurch gekennzeichnet, daß die mittleren Säulen (5c) jeweils als Griffstangen für Fahrgäste ausgebildet sind.

9. Wagenkasten nach einem der Ansprüche 1 bis 8, dadurch gekennzeichnet, daß die äußeren Seitenwände (2) jeweils eine sich soweit wie möglich in Länge des Wagenkastens erstreckende Öffnung aufweisen, die mit beweglichen Wandelementen verschließbar ist.

10. Wagenkasten nach einem der Ansprüche 1 bis 8, dadurch gekennzeichnet, daß die äußeren Seitenwände (2) jeweils aus einander abwechselnden Seitenwandfeldern (2b) und breiten Türöffnungen (2a) bestehen.

11. Wagenkasten nach Anspruch 10, dadurch gekennzeichnet, daß die Türöffnungen (2a) jeweils mit seitlich bewegbaren Türflügeln (7) verschließbar sind, wobei die Türflügel (7) benachbarter Türöffnungen (2a) in ihrer geöffneten Stellung einander weitgehend überdecken.

12. Wagenkasten nach Anspruch 10 oder 11, dadurch gekennzeichnet, daß die Seitenwandfelder (2b) fensterlos sind, wobei lediglich die Türflügel (7) Fenster beinhalten.

13. Wagenkasten nach einem der Ansprüche 10 bis 12, dadurch gekennzeichnet, daß die Seitenwandfelder (2b) aus faserverstärktem Kunststoff hergestellt sind.

14. Wagenkasten nach Anspruch 13, dadurch gekennzeichnet, daß die Seitenwandfelder (2b) an ihrem unteren Rand und an ihrem oberen Rand im Sinne einer Aufnahme von Längsschub ausgeführt sind.
